# EUROPEAN PATENT APPLICATION

(11) **EP 4 723 723 A1**
(43) Date of publication of application: **08.04.2026**
(21) Application number: 23938005.8
(22) Date of filing: 25.05.2023
(51) Int. Cl.: H04W 24/10

(54) **MEASUREMENT METHOD AND APPARATUS, AND STORAGE MEDIUM**

(71) Applicant: Beijing Xiaomi Mobile Software Co., Ltd., Beijing 100085 (CN)
(72) Inventor: LAI, Qingyu, Beijing 100085 (CN); ZHANG, Huilong, Beijing 100085 (CN); WU, Yumin, Beijing 100085 (CN)
(74) Representative: Hersina, Günter
(86) International application number: PCT/CN2023/096375
(87) International publication number: WO 2024/239333

(57) **Abstract**

Disclosed in embodiments of the present application are a measurement method and apparatus, and a storage medium. First information sent by a network device is received, wherein the first information is used for configuring sensing measurement of a first terminal; and a first sensing measurement result obtained after the first terminal performs sensing measurement is sent to the network device according to the first information. In this way, a terminal can send a sensing measurement result to a network device, or a sensing measurement result can be forwarded to a network device by another terminal by means of a sidelink, so that the network device can obtain the sensing measurement result of the terminal, thereby obtaining more information of the terminal side, expanding the sensing range, and improving the system communication efficiency.

## Description

### TECHNICAL FIELD

The disclosure relates to the field of communication technologies, and in particular to a method and an apparatus for measurement, and a storage medium.

### BACKGROUND

To support direct communication between terminals, a sidelink (SL) communication mode is introduced, and an interface between terminals is PC-5. In addition, with the continuous development of mobile communication technologies, theory of wireless sensing is proposed. A terminal is capable of, by detecting received sensing signals, completing sensing of surrounding environments and obtaining environmental information.

### SUMMARY

Embodiments of a first aspect of the present disclosure provide a method for measurement. The method is performed by a first terminal and includes: receiving first information sent by a network device, in which the first information is used to configure sensing measurement of the first terminal; obtaining a first measurement result by performing the sensing measurement; and sending, based on the first information, the first measurement result to the network device.

Embodiments of a second aspect of the present disclosure provide a method for measurement. The method is performed by a second terminal and includes: receiving first information sent by a first terminal, in which the first information is used to configure sensing measurement of the second terminal; obtaining a second measurement result by performing the sensing measurement; and sending, based on the first information, the second measurement result to a first terminal, in which the second measurement result is used for the first terminal to send the second measurement result to a network device, in which the first information is sent by the network device to the first terminal; the first information is further used to configure sensing measurement of the first terminal; the first information is further used for the first terminal to send a first measurement result to the network device; and the first measurement result is obtained by the first terminal performing the sensing measurement.

Embodiments of a third aspect of the present disclosure provide a method for measurement. The method is performed by a network device and includes: sending first information to a first terminal, in which the first information is used to configure sensing measurement of the first terminal; and receiving a first measurement result sent by the first terminal, in which the first measurement result is obtained by the first terminal performing the sensing measurement.

Embodiments of a fourth aspect of the disclosure provide an apparatus for measurement. The apparatus includes: a transceiver unit, configured to receive first information sent by a network device, in which the first information is used to configure sensing measurement of the apparatus; and a processing unit, configured to obtain a first measurement result by performing the sensing measurement; the transceiver unit is further configured to send, based on the first information, the first measurement result to the network device.

Embodiments of a fifth aspect of the disclosure provide an apparatus for measurement. The apparatus includes: a transceiver unit, configured to receive first information sent by a first terminal, in which the first information is used to configure sensing measurement of the apparatus; and a processing unit, configured to obtain a second measurement result by performing the sensing measurement; the transceiver unit is further configured to send, based on the first information, the second measurement result to the first terminal, in which the second measurement result is used for the first terminal to send the second measurement result to a network device, in which the first information is sent by the network device to the first terminal; the first information is further used to configure sensing measurement of the first terminal; the first information is further used for the first terminal to send a first measurement result to the network device; and the first measurement result is obtained by the first terminal performing the sensing measurement.

Embodiments of a sixth aspect of the disclosure provide an apparatus for measurement. The apparatus includes: a transceiver unit, configured to send first information to a first terminal, in which the first information is used to configure sensing measurement of the first terminal; and the transceiver unit is further configured to receive a first measurement result sent by the first terminal, in which the first measurement result is obtained by the first terminal performing the sensing measurement.

Embodiments of a seventh aspect of the disclosure provide a communication device. The communication device includes: a processor and a memory storing a computer program that, when executed by the processor, causes the communication device to implement the method according to the first aspect, or the method according to the second aspect.

Embodiments of an eighth aspect of the disclosure provide a communication device. The communication device includes: a processor and a memory storing a computer program that, when executed by the processor, causes the communication device to implement the method according to the third aspect.

Embodiments of a ninth aspect of the disclosure provide a communication device. The communication device includes: a processor and an interface circuit; in which the interface circuit is configured to receive code instructions and transmit the code instructions to the processor; and the processor is configured to execute the code instructions to implement the method according to the first aspect, or the method according to the second aspect.

Embodiments of a tenth aspect of the disclosure provide a communication device. The communication device includes: a processor and an interface circuit; in which the interface circuit is configured to receive code instructions and transmit the code instructions to the processor; and the processor is configured to execute the code instructions to implement the method according to the third aspect.

Embodiments of a eleventh aspect of the disclosure provide a computer-readable storage medium. The computer-readable storage medium stores instructions that, when executed, cause the method according to the first aspect, or the method according to the second aspect to be implemented.

Embodiments of a twelfth aspect of the disclosure provide a computer-readable storage medium. The computer-readable storage medium stores instructions that, when executed, cause the method according to the third aspect to be implemented.

Embodiments of a thirteenth aspect of the disclosure provide a computer program. When the computer program is run on a computer, the computer is caused to implement the method according to the first aspect, or the method according to the second aspect.

Embodiments of a fourteenth aspect the disclosure provide a computer program. When the computer program is run on a computer, the computer is caused to implement the method according to the third aspect.

Embodiments of the disclosure provide the method and the apparatus for measurement, and the storage medium. The first information sent by the network device is received, in which the first information is used to configure the sensing measurement of the first terminal. The first measurement result is sent to the network device based on the first information, in which the first measurement result is obtained by performing the sensing measurement by the first terminal. This enables the terminal to send the sensing measurement result to the network device, or to forward the sensing measurement result to the network device via a sidelink through another terminal, and further enables the network device to obtain the sensing measurement result of the terminal, and obtain more information from the terminal side. Thus, a sensing range is expanded, and communication efficiency of a system is increased.

Additional aspects and advantages of the disclosure will be set forth in part in the description which follows, and in part will be obvious from the description, or will be learned by practice of the disclosure.

### BRIEF DESCRIPTION OF THE DRAWINGS

In order to explain technical solutions in the embodiments of the disclosure or the related art more clearly, the figures described in the embodiments of the disclosure or required in the related art will be briefly introduced below.
FIG. 1 is a diagram illustrating an architecture of a communication system according to an embodiment of the disclosure.
FIG. 2 is a flow chart illustrating a method for measurement according to an embodiment of the disclosure.
FIG. 3A is a schematic diagram illustrating a channel model according to an embodiment of the disclosure.
FIG. 3B is a schematic diagram illustrating an available coordinate system definition according to an embodiment of the disclosure.
FIG. 4 is a flow chart illustrating a method for measurement according to an embodiment of the disclosure.
FIG. 5 is a flow chart illustrating a method for measurement according to an embodiment of the disclosure.
FIG. 6 is a flow chart illustrating a method for measurement according to an embodiment of the disclosure.
FIG. 7 is a flow chart illustrating a method for measurement according to an embodiment of the disclosure.
FIG. 8 is a block diagram illustrating an apparatus for measurement according to an embodiment of the disclosure.
FIG. 9 is a block diagram illustrating an apparatus for measurement according to an embodiment of the disclosure.
FIG. 10 is a block diagram illustrating an apparatus for measurement according to an embodiment of the disclosure.
FIG. 11 is a block diagram illustrating a measurement device according to an embodiment of the disclosure.
FIG. 12 is a block diagram illustrating a chip according to an embodiment of the disclosure.

### DETAILED DESCRIPTION

Reference will now be made in detail to the example embodiments, examples of which are illustrated in the accompanying figures. When the following description refers to the accompanying figures, the same numerals in different figures refer to the same or similar elements, unless otherwise indicated. The implementations described in the following example embodiments do not represent all implementations consistent with embodiments of the disclosure. Rather, they are merely examples of devices and methods consistent with some aspects of embodiments of the disclosure as recited in the appended claims.

Terms used in the embodiments of the disclosure are for the purpose of describing specific embodiments only, and are not intended to limit the embodiments of the disclosure. As used in the embodiments of the disclosure and the appended claims, the singular forms "a/an" and "the" are also intended to include the plural forms, unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case of" as used here may be interpreted as "upon" or "when" or "in response to determining".

Embodiments of the disclosure are described in detail below, and examples of the embodiments are illustrated in the accompanying figures, throughout which the same or similar symbols indicate the same or similar elements. The embodiments described below with reference to the accompanying figures are examples and are intended to be used to explain the disclosure and are not to be construed as a limitation of the disclosure.

In order to better understand the method for measurement in embodiments of the disclosure, a communication system to which the embodiments of the disclosure are applicable is described below.

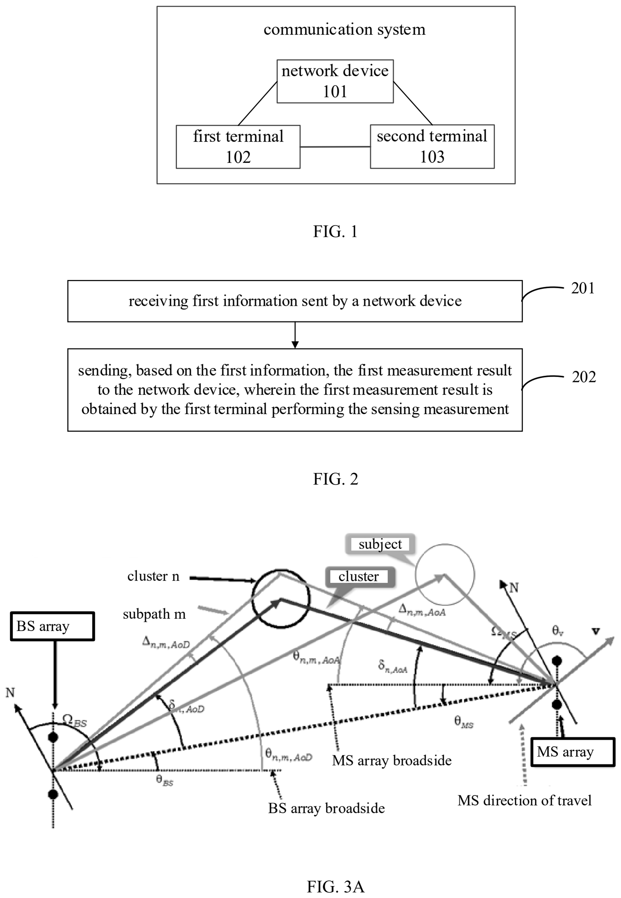

Referring to FIG. 1, it is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes one network device101, one first terminal 102, and one second terminal 103 for example.

It needs to be noted that the technical solution in embodiments of the disclosure is applicable to various communication systems, for example, a long term evolution (LTE) system, a 5th generation (5G) mobile communication system, a 5G new radio (NR) system or other future new mobile communication systems.

The first terminal 102 and the second terminal 103 in the embodiments of the disclosure are user-side entities for receiving or transmitting a signal, for example, the mobile phones. The terminal may be referred to as a user equipment (UE), a mobile station (MS), a mobile terminal (MT), etc. The terminal may be a device with a communication function, such as a vehicle, a smart vehicle, a mobile phone, an Internet of Things device, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology adopted by the terminal and a specific device form adopted by the terminal are not limited in the embodiments of the disclosure.

In some implementations, the communication system of the disclosure may further include the network device 101. The network device 101 is a network-side entity for transmitting or receiving a signal. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the disclosure. The network device according to the embodiments of the disclosure may consist of a central unit (CU) and a distributed unit (DU). The CU may also be referred to as a control unit. A protocol layer of the network device, such as a base station, may be split by using a structure of the CU-DU, so that functions for a part of the protocol layer are placed in the CU for centralized control, and functions of a remaining part or all of the protocol layer are distributed in the DU, and the DU is centrally controlled by the CU.

In some embodiments, names of information and the like are not limited to the names recorded in the embodiments, and terms such as "information", "message", "signal", "signaling", "report", "configuration", "indication", "instruction", "command", "channel", "parameter", "field", "symbol", "codebook", "codeword", "codepoint", "bit", "data", "program", and "chip" may be used interchangeably.

In some embodiments, terms such as "codebook", "codeword", and "precoding matrix" may be used interchangeably. For example, a codebook may be a collection of one or more codewords/precoding matrices.

In some embodiments, terms such as "uplink", "up-link", "physical uplink" may be used interchangeably; terms such as "downlink", "down-link", "physical downlink" may be used interchangeably; and terms such as "side", "sidelink", "side communication", "sidelink communication", "direct connection", "direct link", "direct communication", "direct link communication" may be used interchangeably.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)" and "DL data" may be used interchangeably; terms such as "physical uplink shared channel (PUSCH)" and "UL data" may be used interchangeably.

In some embodiments, terms such as "radio", "wireless", "radio access network (RAN)", "access network (AN)", and "RAN-based" may be used interchangeably.

In some embodiments, terms such as "search space (SS)", "search space set", "search space configuration", "search space set configuration", "control resource set (CORESET)", and "CORESET configuration" may be used interchangeably.

In some embodiments, terms such as "synchronization signal (SS)", "synchronization signal block (SSB)", "reference signal (RS)", "pilot", and "pilot signal" may be used interchangeably.

In some embodiments, terms such as "moment", "time point", "time", and "time location" may be used interchangeably; terms such as "time length", "time period", "time window", "window", and "time" may be used interchangeably.

In some embodiments, terms such as "component carrier (CC)", "cell", "frequency carrier", and "carrier frequency" may be used interchangeably.

In some embodiments, terms such as "resource block (RB)", "physical resource block (PRB)", "sub-carrier group (SCG)", "resource element group (REG)", "PRB pair", "RB pair", and "resource element (RE)" may be used interchangeably.

In some embodiments, terms such as "wireless access scheme" and "waveform" may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, terms such as "frame", "radio frame", "subframe", "slot", "sub-slot", "mini-slot", "symbol", and "transmission time interval (TTI)" may be used interchangeably.

In some embodiments, "acquire", "obtain", "get", "receive", "transmit", "bidirectional transmission", and "send and/or receive" may be used interchangeably, which may be interpreted as receiving from another entity, acquiring from a protocol, obtaining via own processing, autonomous implementation, and other meanings.

In some embodiments, terms such as "send", "transmit", "report", "deliver", "transmit", "bidirectional transmission", and "send and/or receive" may be used interchangeably.

In some embodiments, "predetermined" and "preset" may be interpreted as pre-defined in a protocol or the like, or may be interpreted as an apparatus performing a pre-configuration action.

In some embodiments, "determining" may be interpreted as, but is not limited to, judging, deciding, adjudicating, calculating, computing, processing, deriving, investigating, searching, looking up, retrieving, inquiring, ascertaining, receiving, transmitting, inputting, outputting, accessing, resolving, selecting, choosing, establishing, comparing, "assuming", "expecting", "considering", broadcasting, notifying, communicating, forwarding, configuring, reconfiguring, allocating, mapping, assigning, etc.

In some embodiments, determination or judgment may be performed by a value represented by 1 bit (0 or 1), may be performed by a truth value (Boolean value) represented by true or false, or may be performed by comparison of numerical values (for example, comparison with a predetermined value), which is not limited here.

In some embodiments, "network" may be interpreted as an apparatus (for example, an access network device, a core network device, or the like) included in the network.

In some embodiments, "not expect to receive" may be interpreted as not receiving on a time domain resource and/or a frequency domain resource, or may be interpreted as not performing subsequent processing on data or the like after receiving the data or the like; "not expect to send" may be interpreted as not sending, or may be interpreted as sending but not expecting a response from a receiver to the sent content.

In some embodiments, acquisition of data, information, or the like may comply with laws and regulations of the country where it is located.

In some embodiments, data, information, or the like may be acquired after user consent is obtained.

Further, each element, each row, or each column in the tables in the embodiments of the disclosure may be implemented as an independent embodiment, and a combination of any elements, any rows, or any columns may also be implemented as an independent embodiment.

To support direct communication between terminals, a sidelink (SL) communication mode is introduced, and an interface between terminals is PC-5. In addition, with the continuous development of mobile communication technologies, theory of wireless sensing is proposed. A terminal is capable of, by detecting received sensing signals, completing sensing of surrounding environments and obtaining environmental information.

However, a current 5G sidelink communication system does not include a configuration for sensing measurement, and the terminal cannot report a sensing measurement result to another terminal or forward the sensing measurement result to a network device by another terminal.

It may be understood that, the communication system described in the embodiments of the disclosure is intended to explain technical solution of the embodiments of the disclosure more clearly, and does not constitute the limitation to the technical solution of the embodiments of the disclosure. Those skilled in the art know that, with evolution of the system architecture and emergence of new service scenarios, the technical solution according to the embodiments of the disclosure are also applicable to similar technical problems.

The method and apparatus for measurement in the disclosure are further described in combination with the accompanying figures.

Referring to FIG. 2, FIG. 2is a flow chart illustrating a method for measurement according to an embodiment of the disclosure. It needs to be noted that the method for measurement in the embodiment of the disclosure is performed by a first terminal. The method may be performed independently or may be performed in combination with any of other embodiments of the disclosure. As shown in FIG. 2, the method may include the following steps 201 to 202.

At step 201, first information sent by a network device is received.

In an embodiment of the disclosure, the first terminal may receive the first information sent by the network device.

In an example, the first information is used to configure sensing measurement of the first terminal.

In some embodiments, before receiving the first information sent by the network device, the first terminal may send a first request to the network device, in which the first request is used to request the network device to send the first information.

In some embodiments, the first terminal may further send the first information to a second terminal. The first information is used to configure sensing measurement of the second terminal.

In an example, before sending the first information to the second terminal, the first terminal may modify the received first information sent by the network device, and then send the modified first information (the modified first information may be referred as fourth information) to the second terminal.

In an example, the first terminal may send the first information to the second terminal when performing sidelink measurement.

In some embodiments, the first terminal may further receive a second measurement result sent by the second terminal, and send the second measurement result to the network device.

In some embodiments, the first information may be used to add a configuration for the sensing measurement of the terminal.

In some embodiments, the first information may be used to modify a configuration for the sensing measurement of the terminal.

In some embodiments, the first information may be used to delete a configuration for the sensing measurement of the terminal.

In some embodiments, the first information may be used to add and modify a configuration for the sensing measurement of the terminal.

In some embodiments, the first information may be used to add and delete a configuration for the sensing measurement of the terminal.

In some embodiments, the first information may be used to modify and delete a configuration for the sensing measurement of the terminal.

In some embodiments, the first information may be used to add, modify, and delete a configuration for the sensing measurement of the terminal.

For example, the terminal receives one piece of first information used to add the configuration for the sensing measurement of the terminal. The terminal then receives another piece of first information used to modify one or several configurations in an existing configuration for the sensing measurement of the terminal, and the first information is also used to add one or several configurations in the existing configuration for the sensing measurement of the terminal.

In some embodiments, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

It should be noted that the terminal may receive the at least one sensing signal cluster to perform the sensing measurement. Each sensing signal cluster includes at least one sensing signal, and the sensing signal in the at least one sensing signal cluster is a signal reflected by a sensed target object. The terminal may, based on the at least one sensing signal cluster received, complete the sensing measurement of the sensed target object and obtain the measurement result.

In an example, the sensing signal may be sent by the network device, or may be sent by the terminal.

In an example, the second information may be configured by the network device for the terminal based on a capability of the terminal, and may be used by the terminal to determine the at least one sensing signal cluster received when performing the sensing measurement.

In an example, the second information may be named as "measurement objects", etc., which is not limited in the disclosure.

For example, as shown in FIG. 3A, the sensing measurement may adopt a communication channel model where A transmits and B receives (that is, the sensing signal is transmitted by the network device), in which one or more signal clusters (target clusters) are regarded as signals reflected by the sensed target object, and other signal clusters (interference clusters) may constitute clutter interference signals for the sensing signal clusters. The terminal performs the sensing measurement based on sensing signals of the target clusters.

In some embodiments, the third information may include at least one of: sending the measurement result by the terminal when a first event is satisfied; or sending the measurement result periodically by the terminal.

In an example, the first event may include that a strength of a received sensing signal cluster is greater than a preset first threshold, that is, when the strength of the sensing signal cluster received by the terminal is greater than the preset first threshold, the terminal sends the measurement result.

It may be understood that the first event may also include other events for triggering the terminal to send the measurement result, such as the number of received sensing signal clusters, etc., which is not limited in the disclosure.

In an example, the third information may be named as "reporting configurations", etc., which is not limited in the disclosure.

In some embodiments, the association between the second information and the third information is used to trigger the terminal to send the measurement result.

It may be understood that the second information is used to determine the at least one sensing signal cluster, that is, the at least one received sensing signal cluster that the terminal needs to measure. The association between the second information and the third information may be an association between each piece of information included in the second information and each piece of information included in the third information. For example, respective sensing signal clusters included in the second information may correspond to different pieces of third information.

For example, the second information includes a first sensing signal cluster and a second sensing signal cluster, and the third information includes sending the measurement result by the terminal when the first event is satisfied and sending the measurement result periodically by the terminal. The association between the second information and the third information may include that: for the first sensing signal cluster, the terminal sends the measurement result when the first event is satisfied; for the second sensing signal cluster, the terminal sends the measurement result periodically.

In an example, the association between the second information and the third information may be named as "measurement identities", etc., which is not limited in the disclosure.

Similarly, the first terminal obtains fourth information by modifying the first information. The fourth information may include at least one of: fifth information, in which the fifth information is used by the second terminal to determine at least one sensing signal cluster received when performing the sensing measurement; sixth information, in which the sixth information is used by the second terminal to send the second measurement result; or an association between the fifth information and the sixth information, in which the association is used to trigger the second terminal to send the second measurement result.

It should be noted that the terminal may receive the at least one sensing signal cluster to perform the sensing measurement. Each sensing signal cluster includes at least one sensing signal, and the sensing signal in the at least one sensing signal cluster is a signal reflected by a sensed target object. The terminal may, based on the at least one sensing signal cluster received, complete the sensing measurement of the sensed target object and obtain the measurement result.

In an example, the sensing signal may be sent by the network device, or may be sent by the terminal.

In an example, the fifth information may be named as "measurement objects", etc., which is not limited in the disclosure.

In some embodiments, the sixth information may include at least one of: sending the measurement result by the terminal when a first event is satisfied; or sending the measurement result periodically by the terminal.

In an example, the first event may include that a strength of a received sensing signal cluster is greater than a preset first threshold, that is, when the strength of the sensing signal cluster received by the terminal is greater than the preset first threshold, the terminal sends the measurement result.

It may be understood that the first event may also include other events for triggering the terminal to send the measurement result, such as the number of received sensing signal clusters, etc., which is not limited in the disclosure.

In an example, the sixth information may be named as "reporting configurations", etc., which is not limited in the disclosure.

In some embodiments, the association between the fifth information and the sixth information is used to trigger the terminal to send the measurement result.

It may be understood that the fifth information is used to determine the at least one sensing signal cluster, that is, at least one received sensing signal cluster that the terminal needs to measure. The association between the fifth information and the sixth information may be an association between each piece of information included in the fifth information and each piece of information included in the sixth information. For example, respective sensing signal clusters included in the fifth information may correspond to different pieces of sixth information.

For example, the fifth information includes a first sensing signal cluster and a second sensing signal cluster, and the sixth information includes sending the measurement result by the terminal when the first event is satisfied and sending the measurement result periodically by the terminal. The association between the fifth information and the sixth information may include: for the first sensing signal cluster, the terminal sends the measurement result when the first event is satisfied; for the second sensing signal cluster, the terminal sends the measurement result periodically.

In an example, the association between the fifth information and the sixth information may be named as "measurement identities", etc., which is not limited in the disclosure.

At step 202, a first measurement result is sent to the network device based on the first information, in which the first measurement result is obtained by performing the sensing measurement by the first terminal.

In an embodiment of the disclosure, the first terminal may send, based on the first information, the first measurement result to the network device.

The first measurement result is obtained by the first terminal performing the sensing measurement based on the configuration of the first information.

In an example, the first measurement result may include at least one of: initial coordinate information of the at least one sensing signal cluster received when the first terminal performs the sensing measurement; radar cross section (RCS) information of the at least one sensing signal cluster received when the first terminal performs the sensing measurement; power information of the at least one sensing signal cluster received when the first terminal performs the sensing measurement; delay information of the at least one sensing signal cluster received when the first terminal performs the sensing measurement; angle information of the at least one sensing signal cluster received when the first terminal performs the sensing measurement; angle spread information of the at least one sensing signal cluster received when the first terminal performs the sensing measurement; initial phase information of the at least one sensing signal cluster received when the first terminal performs the sensing measurement; motion state information of a sensed object; coordinate information of the first terminal which performs the sensing measurement; or motion state information of the first terminal which performs the sensing measurement.

In an example, the motion state information may include: motion speed information and/or motion direction information.

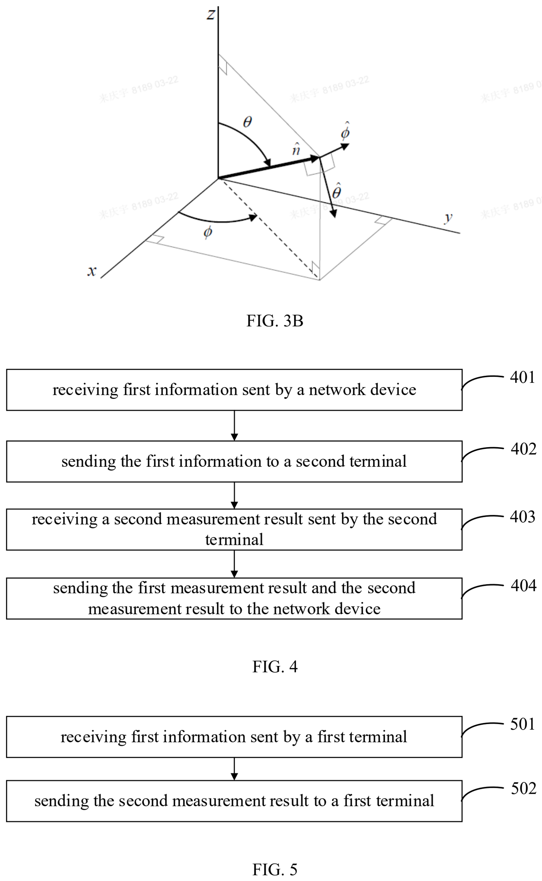

For example, in an embodiment of the disclosure, the coordinate information included in the measurement result may use a coordinate system defined in a standard as shown in FIG. 3B. FIG. 3B shows a definition of spherical angles and spherical unit vectors in a Cartesian coordinate system, in which n̂ denotes a given direction, and θ and ϕ denote spherical basis vectors.

In some embodiments, the first terminal may send the first measurement result to the network device based on the second information the third information, and the association between the second information and the third information included in the first information.

For example, the first terminal may send the first measurement result to the network device when a first event configured in the first information is satisfied.

For example, the first terminal may periodically send the first measurement result to the network device based on period information configured in the first information.

To sum up, the first information sent by the network device is received, in which the first information is used to configure the sensing measurement of the first terminal. The first measurement result is sent to the network device based on the first information, in which the first measurement result is obtained by performing the sensing measurement by the first terminal. This enables the terminal to send the sensing measurement result to the network device, or to forward the sensing measurement result to the network device via a sidelink through another terminal, and further enables the network device to obtain the sensing measurement result of the terminal, and obtain more information from the terminal side. Thus, a sensing range is expanded, and communication efficiency of a system is increased.

Referring to FIG. 4, FIG. 4 is a flow chart illustrating a method for measurement according to an embodiment of the disclosure. It needs to be noted that the method for measurement in the embodiment of the disclosure is performed by a first terminal. The method may be performed independently or may be performed in combination with any of other embodiments of the disclosure. As shown in FIG. 4, the method may include the following steps 401 to 404.

At step 401, first information sent by a network device is received.

In an embodiment of the disclosure, the first terminal may receive the first information sent by the network device.

In an example, the first information is used to configure sensing measurement of the first terminal.

In some embodiments, before receiving the first information sent by the network device, the first terminal may send a first request to the network device, in which the first request is used to request the network device to send the first information.

In some embodiments, the first information may be used to add a configuration for the sensing measurement of the first terminal.

In some embodiments, the first information may be used to modify a configuration for the sensing measurement of the first terminal.

In some embodiments, the first information may be used to delete a configuration for the sensing measurement of the first terminal.

In some embodiments, the first information may be used to add and modify a configuration for the sensing measurement of the first terminal.

In some embodiments, the first information may be used to add and delete a configuration for the sensing measurement of the first terminal.

In some embodiments, the first information may be used to modify and delete a configuration for the sensing measurement of the first terminal.

In some embodiments, the first information may be used to add, modify, and delete a configuration for the sensing measurement of the first terminal.

For example, the first terminal receives one piece of first information, used to add the configuration for the sensing measurement of the first terminal. The first terminal then receives another piece of first information, used to modify one or several configurations in an existing configuration for the sensing measurement of the first terminal, and the first information is also used to add one or several configurations in the existing configuration for the sensing measurement of the first terminal.

In some embodiments, the first information includes at least one of: second information, in which the second information is used by the first terminal to determine at least one sensing signal cluster received when performing the sensing measurement; third information, in which the third information is used by the first terminal to send the measurement result; or an association between the second information and the third information, in which the association is used to trigger the first terminal to send the measurement result.

It should be noted that the first terminal may receive the at least one sensing signal cluster to perform the sensing measurement. Each sensing signal cluster includes at least one sensing signal, and the sensing signal in the at least one sensing signal cluster is a signal reflected by a sensed target object. The first terminal may, based on the at least one sensing signal cluster received, complete the sensing measurement of the sensed target object and obtain the measurement result.

In an example, the sensing signal may be sent by the network device, or may be sent by the first terminal.

In an example, the second information may be configured by the network device for the first terminal based on a capability of the first terminal, and may be used by the first terminal to determine the at least one sensing signal cluster received when performing the sensing measurement.

In an example, the second information may be named as "measurement objects", etc., which is not limited in the disclosure.

For example, as shown in FIG. 3A, the sensing measurement may adopt a communication channel model where A transmits and B receives (that is, the sensing signal is transmitted by the network device), in which one or more signal clusters (target clusters) are regarded as signals reflected by the sensed target object, and other signal clusters (interference clusters) may constitute clutter interference signals for the sensing signal clusters. The first terminal performs the sensing measurement according to the sensing signals of the target clusters.

In some embodiments, the third information may include at least one of: sending the measurement result by the the first terminal when a first event is satisfied; or sending the measurement result periodically by the first terminal.

In an example, the first event may include that a strength of a received sensing signal cluster is greater than a preset first threshold, that is, when the strength of the sensing signal cluster received by the first terminal is greater than the preset first threshold, the first terminal sends the measurement result.

It may be understood that the first event may also include other events for triggering the first terminal to send the measurement result, such as the number of received sensing signal clusters, etc., which is not limited in the disclosure.

In an example, the third information may be named as "reporting configurations", etc., which is not limited in the disclosure.

In some embodiments, the association between the second information and the third information is used to trigger the first terminal to send the measurement result.

It may be understood that the second information is used to determine the at least one sensing signal cluster, that is, the at least one received sensing signal cluster that the terminal needs to measure. The association between the second information and the third information may be an association between each piece of information included in the second information and each piece of information included in the third information. For example, respective sensing signal clusters included in the second information may correspond to different pieces of third information.

For example, the second information includes a first sensing signal cluster and a second sensing signal cluster, and the third information includes sending the measurement result by the first terminal when the first event is satisfied and sending the measurement result periodically by the first terminal. The association between the second information and the third information may include that: for the first sensing signal cluster, the first terminal sends the measurement result when the first event is satisfied; for the second sensing signal cluster, the first terminal sends the measurement result periodically.

In an example, the association between the second information and the third information may be named as "measurement identities", etc., which is not limited in the disclosure.

At step 402, the first information is sent to the second terminal.

In some embodiments, the first terminal may further send the first information to the second terminal, in which the first information is used to configure sensing measurement of the second terminal.

In an example, the first terminal may directly forward the received first information to the second terminal via a sidelink.

In an example, before sending the first information to the second terminal, the first terminal may modify the received first information sent by the network device, and then send the modified first information to the second terminal.

In an example, the first terminal may send the first information to the second terminal when performing sidelink measurement.

It may be understood that, in embodiments of the disclosure, the first information sent by the first terminal to the second terminal and the first information received by the first terminal from the network device may be the same (that is, the first terminal directly forwards the first information received from the network device to the second terminal), or may be different (that is, the first terminal modifies the received first information and sends the modified first information to the second terminal).

In some embodiments, the first information sent by the first terminal to the second terminal may be used to add a configuration for the sensing measurement of the second terminal.

In some embodiments, the first information sent by the first terminal to the second terminal may be used to modify a configuration for the sensing measurement of the second terminal.

In some embodiments, the first information sent by the first terminal to the second terminal may be used to delete a configuration for the sensing measurement of the second terminal.

In some embodiments, the first information sent by the first terminal to the second terminal may be used to add and modify a configuration for the sensing measurement of the second terminal.

In some embodiments, the first information sent by the first terminal to the second terminal may be used to add and delete a configuration for the sensing measurement of the second terminal.

In some embodiments, the first information sent by the first terminal to the second terminal may be used to modify and delete a configuration for the sensing measurement of the second terminal.

In some embodiments, the first information sent by the first terminal to the second terminal may be used to add, modify, and delete a configuration for the sensing measurement of the second terminal.

For example, the second terminal receives one piece of first information used to add the configuration for the sensing measurement of the second terminal. The second terminal then receives another piece of first information used to modify one or several configurations in an existing configuration for the sensing measurement of the second terminal, and the first information is also used to add one or several configurations in the existing configuration for the sensing measurement of the second terminal.

In some embodiments, the first information sent by the first terminal to the second terminal includes at least one of: second information, in which the second information is used by the second terminal to determine at least one sensing signal cluster received when performing the sensing measurement; third information, in which the third information is used by the second terminal to send the measurement result; or an association between the second information and the third information, in which the association is used to trigger the second terminal to send the measurement result.

It should be noted that the second terminal may receive the at least one sensing signal cluster to perform the sensing measurement. Each sensing signal cluster includes at least one sensing signal, and the sensing signal in the at least one sensing signal cluster is a signal reflected by a sensed target object. The second terminal may, based on the at least one sensing signal cluster received, complete the sensing measurement of the sensed target object and obtain the measurement result.

In an example, the sensing signal may be sent by the network device, or may be sent by the second terminal, or may also be sent by the first terminal.

In an example, the second information may be named as "measurement objects", etc., which is not limited in the disclosure.

For example, as shown in FIG. 3A, the sensing measurement may adopt a communication channel model where A transmits and B receives (that is, the sensing signal is transmitted by the network device), in which one or more signal clusters (target clusters) are regarded as signals reflected by the sensed target object, and other signal clusters (interference clusters) may constitute clutter interference signals for the sensing signal clusters. The second terminal performs the sensing measurement based on sensing signals of the target clusters.

In some embodiments, the third information may include at least one of: sending the measurement result by the second terminal when a first event is satisfied; or sending the measurement result periodically by the second terminal.

In an example, the first event may include that a strength of a received sensing signal cluster is greater than a preset first threshold, that is, when the strength of the sensing signal cluster received by the second terminal is greater than the preset first threshold, the second terminal sends the measurement result.

It may be understood that the first event may also include other events for triggering the second terminal to send the measurement result, such as the number of received sensing signal clusters, etc., which is not limited in the disclosure.

In an example, the third information may be named as "reporting configurations", etc., which is not limited in the disclosure.

In some embodiments, the association between the second information and the third information is used to trigger the second terminal to send the measurement result.

It may be understood that the second information is used to determine the at least one sensing signal cluster, that is, the at least one received sensing signal cluster that the second terminal needs to measure. The association between the second information and the third information may be an association between each piece of information included in the second information and each piece of information included in the third information. For example, respective sensing signal clusters included in the second information may correspond to different pieces of third information.

For example, the second information includes a first sensing signal cluster and a second sensing signal cluster, and the third information includes sending the measurement result by the second terminal when the first event is satisfied and sending the measurement result periodically by the second terminal. The association between the second information and the third information may include that: for the first sensing signal cluster, the second terminal sends the measurement result when the first event is satisfied; for the second sensing signal cluster, the second terminal sends the measurement result periodically.

In an example, the association between the second information and the third information may be named as "measurement identities", etc., which is not limited in the disclosure.

At step 403, a second measurement result sent by the second terminal is received.

In some embodiments, the first terminal may further receive the second measurement result sent by the second terminal, and send the second measurement result to the network device.

The second measurement result is obtained by the second terminal performing the sensing measurement based on the configuration of the first information.

In an example, the second measurement result may include at least one of: initial coordinate information of the at least one sensing signal cluster received when the second terminal performs the sensing measurement; RCS information of the at least one sensing signal cluster received when the second terminal performs the sensing measurement; power information of the at least one sensing signal cluster received when the second terminal performs the sensing measurement; delay information of the at least one sensing signal cluster received when the second terminal performs the sensing measurement; angle information of the at least one sensing signal cluster received when the second terminal performs the sensing measurement; angle spread information of the at least one sensing signal cluster received when the second terminal performs the sensing measurement; initial phase information of the at least one sensing signal cluster received when the second terminal performs the sensing measurement; motion state information of a sensed object; coordinate information of the second terminal which performs the sensing measurement; or motion state information of the second terminal which performs the sensing measurement.

In an example, the motion state information may include: motion speed information and/or motion direction information.

For example, in an embodiment of the disclosure, the coordinate information included in the measurement result may use a coordinate system defined in a standard as shown in FIG. 3B. FIG. 3B shows a definition of spherical angles and spherical unit vectors in a Cartesian coordinate system, in which n̂ denotes a given direction, and θ and ϕ denote spherical basis vectors.

In some embodiments, the second terminal may send the second measurement result to the first terminal via a sidelink based on the second information, the third information, and the association between the second information and the third information included in the first information.

For example, the second terminal may send the second measurement result to the first terminal when a first event configured in the first information is satisfied.

For example, the second terminal may periodically send the second measurement result to the first terminal based on period information configured in the first information.

At step 404, the first measurement result and the second measurement result are sent to the network device.

In an embodiment of the disclosure, the first terminal may send, to the network device, the first measurement result obtained by the first terminal performing the sensing measurement, and the received second measurement result sent by the second terminal.

The first measurement result is obtained by the first terminal performing the sensing measurement based on the configuration of the first information.

In an example, the first measurement result may include at least one of: initial coordinate information of at least one sensing signal cluster received when the first terminal performs the sensing measurement; RCS information of the at least one sensing signal cluster; power information of the at least one sensing signal cluster; delay information of the at least one sensing signal cluster; angle information of the at least one sensing signal cluster; angle spread information of the at least one sensing signal cluster; initial phase information of the at least one sensing signal cluster; motion state information of a sensed object; coordinate information of the first terminal which performs the sensing measurement; or motion state information of the first terminal which performs the sensing measurement.

In an example, the motion state information may include: motion speed information and/or motion direction information.

For example, in the embodiment of the disclosure, the coordinate information included in the measurement result may use the coordinate system defined in the standard as shown in FIG. 3B. FIG. 3B shows the definition of the spherical angles and the spherical unit vectors in the Cartesian coordinate system, in which fi denotes a given direction, and θ and ϕ denote spherical basis vectors.

In some embodiments, the first terminal may send the first measurement result to the network device based on the second information, the third information, and the association between the second information and the third information included in the first information.

For example, the first terminal may send the first measurement result to the network device when the first event configured in the first information is satisfied.

For example, the first terminal may periodically send the first measurement result to the network device based on the period information configured in the first information.

In some embodiments, after receiving the second measurement result sent by the second terminal, the first terminal may send the second measurement result to the network device.

In some embodiments, after receiving the second measurement result, the first terminal may send, based on the first information, the second measurement result to the network device along with the first measurement result.

In some embodiments, the second measurement result may also be sent directly to the network device by the second terminal.

To sum up, the first information sent by the network device is received, the first information is sent to the second terminal; the second measurement result sent by the second terminal is received; and the first measurement result and the second measurement result are sent to the network device. This enables the terminal to send the sensing measurement result to the network device, or to forward the sensing measurement result to the network device via the sidelink through another terminal, and further enables the network device to obtain the sensing measurement result of the terminal and obtain more information from the terminal side. Further, the terminal may forward the configuration for the sensing measurement to another terminal via the sidelink. Thus, a sensing range is expanded, more measurement results may be obtained, and communication efficiency of a system may be increased.

Referring to FIG. 5, FIG. 5 is a flow chart illustrating a method for measurement according to an embodiment of the disclosure. It needs to be noted that the method for measurement in this embodiment of the disclosure is performed by a second terminal. The method may be performed independently or may be performed in combination with any of other embodiments of the disclosure. As shown in FIG. 5, the method may include the following steps 501 to 502.

At step 501, first information sent by a first terminal is received.

In some embodiments of the present disclosure, the second terminal may receive the first information sent by the first terminal, in which the first information is used to configure sensing measurement of the second terminal.

In an example, the second terminal may receive the first information sent by the first terminal when performing a sidelink measurement.

In an example, the first information is received by the first terminal from a network device, the first terminal may directly forward the received first information to the second terminal via a sidelink.

In an example, before sending the first information to the second terminal, the first terminal may modify the received first information sent by the network device, and then send the modified first information to the second terminal.

It may be understood that, in embodiments of the disclosure, the first information sent by the first terminal to the second terminal and the first information received by the first terminal from the network device may be the same (that is, the first terminal directly forwards the first information received from the network device to the second terminal), or may be different (that is, the first terminal modifies the received first information and sends the modified first information to the second terminal).

In some embodiments, the first information sent by the first terminal to the second terminal may be used to add a configuration for the sensing measurement of the second terminal.

In some embodiments, the first information sent by the first terminal to the second terminal may be used to modify a configuration for the sensing measurement of the second terminal.

In some embodiments, the first information sent by the first terminal to the second terminal may be used to delete a configuration for the sensing measurement of the second terminal.

In some embodiments, the first information sent by the first terminal to the second terminal may be used to add and modify a configuration for the sensing measurement of the second terminal.

In some embodiments, the first information sent by the first terminal to the second terminal may be used to add and delete a configuration for the sensing measurement of the second terminal.

In some embodiments, the first information sent by the first terminal to the second terminal may be used to modify and delete a configuration for the sensing measurement of the second terminal.

In some embodiments, the first information sent by the first terminal to the second terminal may be used to add, modify, and delete a configuration for the sensing measurement of the second terminal.

For example, the second terminal receives one piece of first information, used to add the configuration for the sensing measurement of the second terminal. The second terminal then receives another piece of first information, used to modify one or several configurations in an existing configuration for the sensing measurement of the second terminal, and the first information is also used to add one or several configurations in the existing configuration for the sensing measurement of the second terminal.

In some embodiments, the first information sent by the first terminal to the second terminal includes at least one of: second information, in which the second information is used by the second terminal to determine at least one sensing signal cluster received when performing the sensing measurement; third information, in which the third information is used by the second terminal to send the measurement result; or an association between the second information and the third information, in which the association is used to trigger the second terminal to send the measurement result.

It should be noted that the second terminal may receive the at least one sensing signal cluster to perform the sensing measurement. Each sensing signal cluster includes at least one sensing signal, and the sensing signal in the at least one sensing signal cluster is a signal reflected by a sensed target object. The second terminal may, based on the at least one sensing signal cluster received, complete the sensing measurement of the sensed target object and obtain the measurement result.

In an example, the sensing signal may be sent by the network device, or may be sent by the second terminal, or may also be sent by the first terminal.

In an example, the second information may be named as "measurement objects", etc., which is not limited in the disclosure.

For example, as shown in FIG. 3A, the sensing measurement may adopt a communication channel model where A transmits and B receives (that is, the sensing signal is transmitted by the network device), in which one or more signal clusters (target clusters) are regarded as signals reflected by the sensed target object, and other signal clusters (interference clusters) may constitute clutter interference signals for the sensing signal clusters. The second terminal performs the sensing measurement based on sensing signals of the target clusters.

In some embodiments, the third information may include at least one of: sending the second measurement result by the second terminal when a first event is satisfied; or sending the second measurement result periodically by the second terminal.

In an example, the first event may include that a strength of a received sensing signal cluster is greater than a preset first threshold, that is, when the strength of the sensing signal cluster received by the second terminal is greater than the preset first threshold, the second terminal sends the measurement result.

It may be understood that the first event may also include other events for triggering the second terminal to send the measurement result, such as the number of received sensing signal clusters, etc., which is not limited in the disclosure.

In an example, the third information may be named as "reporting configurations", etc., which is not limited in the disclosure.

In some embodiments, the association between the second information and the third information is used to trigger the second terminal to send the measurement result.

It may be understood that the second information is used to determine the at least one sensing signal cluster, that is, the at least one received sensing signal cluster that the second terminal needs to measure. The association between the second information and the third information may be an association between each piece of information included in the second information and each piece of information included in the third information. For example, respective sensing signal clusters included in the second information may correspond to different pieces of third information.

For example, the second information includes a first sensing signal cluster and a second sensing signal cluster, and the third information includes sending the measurement result by the second terminal when the first event is satisfied and sending the measurement result periodically by the second terminal. The association between the second information and the third information may include that: for the first sensing signal cluster, the second terminal sends the measurement result when the first event is satisfied; for the second sensing signal cluster, the second terminal sends the measurement result periodically.

In an example, the association between the second information and the third information may be named as "measurement identities", etc., which is not limited in the disclosure.

At step 502, a second measurement result is sent to the first terminal.

In this embodiment of this disclosure, the second terminal may send the second measurement result to the first terminal based on the configuration of the first information. Further, the second measurement result may be sent to the network device by the first terminal.

The second measurement result is obtained by the second terminal performing the sensing measurement based on the configuration of the first information.

In an example, the second measurement result may include at least one of: initial coordinate information of at least one sensing signal cluster received when the second terminal performs the sensing measurement; RCS information of at least one sensing signal cluster received when the second terminal performs the sensing measurement; power information of at least one sensing signal cluster received when the second terminal performs the sensing measurement; delay information of at least one sensing signal cluster received when the second terminal performs the sensing measurement; angle information of at least one sensing signal cluster received when the second terminal performs the sensing measurement; angle spread information of at least one sensing signal cluster received when the second terminal performs the sensing measurement; initial phase information of at least one sensing signal cluster received when the second terminal performs the sensing measurement; motion state information of a sensed object; coordinate information of the second terminal which performs the sensing measurement; or motion state information of the second terminal which performs the sensing measurement.

In an example, the motion state information may include: motion speed information and/or motion direction information.

For example, in an embodiment of the disclosure, the coordinate information included in the measurement result may use a coordinate system defined in a standard as shown in FIG. 3B. FIG. 3B shows a definition of spherical angles and spherical unit vectors in a Cartesian coordinate system, in which n̂ denotes a given direction, and θ and ϕ denote spherical basis vectors.

In some embodiments, the second terminal may send the second measurement result to the first terminal via a sidelink based on the second information, the third information, and the association between the second information and the third information included in the first information.

For example, the second terminal may send the second measurement result to the first terminal when a first event configured in the first information is satisfied.

For example, the second terminal may periodically send the second measurement result to the first terminal based on period information configured in the first information.

To sum up, the first information sent by the first terminal is received, in which the first information is used to configure the sensing measurement of the second terminal. The second measurement result is sent to the first terminal based on the first information, in which the second measurement result is obtained by the second terminal performing the sensing measurement, and the second measurement result is used for the first terminal to send the second measurement result to the network device. This enables the terminal to send the sensing measurement result to the network device, or to forward the sensing measurement result to the network device via a sidelink through another terminal, and enables the network device to obtain the sensing measurement result of the terminal and to obtain more information from the terminal side. Further, the terminal may forward the configuration for the sensing measurement to another terminal via the sidelink. Thus, a sensing range is expanded, more measurement results may be obtained, and communication efficiency of a system may be increased.

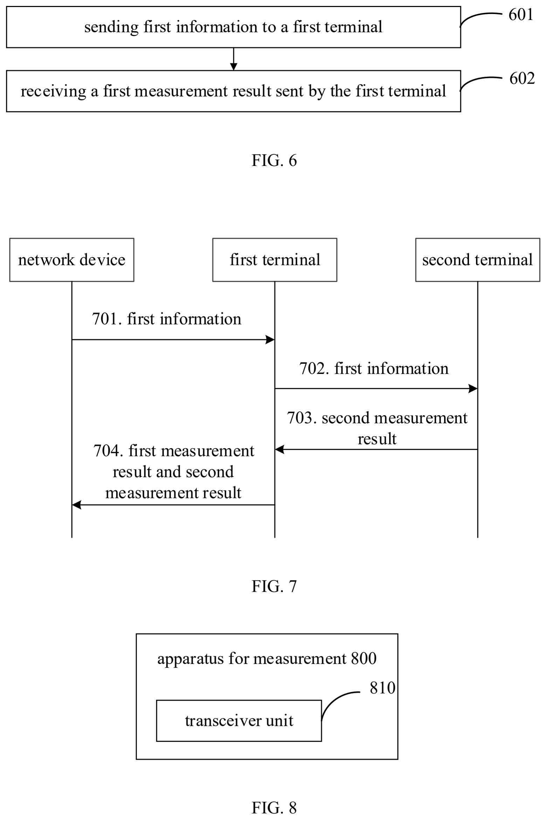

Referring to FIG. 6, FIG. 6is a flow chart illustrating a method for measurement according to an embodiment of the disclosure. It needs to be noted that the method for measurement in this embodiment of the disclosure is performed by a network device. The method may be performed independently or may be performed in combination with any other embodiments of the disclosure. As shown in FIG. 6, the method may include the following steps 601 to 602.

At step 601, first information is sent to a first terminal.

In an embodiment of the disclosure, the network device may send the first information to the first terminal.

In an example, the first information is used to configure sensing measurement of the first terminal.

In some embodiments, before sending the first information to the first terminal, the network device may receive a first request sent by the first terminal, in which the first request is used to request the network device to send the first information.

In some embodiments, the first information may be sent to the second terminal by the first terminal, in which the first information is used to configure sensing measurement of the second terminal.

In an example, before sending the first information to the second terminal, the first terminal may modify the received first information sent by the network device, and then send the modified first information to the second terminal.

In an example, the first terminal may send the first information to the second terminal when performing sidelink measurement.

In some embodiments, the first information may be used to add a configuration for the sensing measurement of the terminal.

In some embodiments, the first information may be used to modify a configuration for the sensing measurement of the terminal.

In some embodiments, the first information may be used to delete a configuration for the sensing measurement of the terminal.

In some embodiments, the first information may be used to add and modify a configuration for the sensing measurement of the terminal.

In some embodiments, the first information may be used to add and delete a configuration for the sensing measurement of the terminal.

In some embodiments, the first information may be used to modify and delete a configuration for the sensing measurement of the terminal.

In some embodiments, the first information may be used to add, modify, and delete a configuration for the sensing measurement of the terminal.

For example, the terminal receives one piece of first information, used to add the configuration for the sensing measurement of the terminal. The terminal then receives another piece of first information, used to modify one or several configurations in an existing configuration for the sensing measurement of the terminal, and the first information is also used to add one or several configurations in the existing configuration for the sensing measurement of the terminal.

In some embodiments, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

It should be noted that the terminal may receive the at least one sensing signal cluster to perform the sensing measurement. Each sensing signal cluster includes at least one sensing signal, and the sensing signal in the at least one sensing signal cluster is a signal reflected by a sensed target object. The terminal may, based on the at least one sensing signal cluster received, complete the sensing measurement of the sensed target object and obtain the measurement result.

In an example, the sensing signal may be sent by the network device, or may be sent by the terminal.

In an example, the second information may be configured by the network device for the terminal based on a capability of the terminal, and may be used by the terminal to determine the at least one sensing signal cluster received when performing the sensing measurement.

In an example, the second information may be named as "measurement objects", etc., which is not limited in the disclosure.

For example, as shown in FIG. 3A, the sensing measurement may adopt a communication channel model where A transmits and B receives (that is, the sensing signal is transmitted by the network device), in which one or more signal clusters (target clusters) are regarded as signals reflected by the sensed target object, and other signal clusters (interference clusters) may constitute clutter interference signals for the sensing signal clusters. The terminal performs the sensing measurement based on sensing signals of the target clusters.

In some embodiments, the third information may include at least one of: sending the measurement result by the terminal when a first event is satisfied; or sending the measurement result periodically by the terminal.

In an example, the first event may include that a strength of a received sensing signal cluster is greater than a preset first threshold, that is, when the strength of the sensing signal cluster received by the terminal is greater than the preset first threshold, the terminal sends the measurement result.

It may be understood that the first event may also include other events for triggering the terminal to send the measurement result, such as the number of received sensing signal clusters, etc., which is not limited in the disclosure.

In an example, the third information may be named as "reporting configurations", etc., which is not limited in the disclosure.

In some embodiments, the association between the second information and the third information is used to trigger the terminal to send the measurement result.

It may be understood that the second information is used to determine the at least one sensing signal cluster, that is, the at least one received sensing signal cluster that the terminal needs to measure. The association between the second information and the third information may be an association between each piece of information included in the second information and each piece of information included in the third information. For example, respective sensing signal clusters included in the second information may correspond to different pieces of third information.

For example, the second information includes a first sensing signal cluster and a second sensing signal cluster, and the third information includes sending the measurement result by the terminal when the first event is satisfied and sending the measurement result periodically by the terminal. The association between the second information and the third information may include that: for the first sensing signal cluster, the terminal sends the measurement result when the first event is satisfied; for the second sensing signal cluster, the terminal sends the measurement result periodically.

In an example, the association between the second information and the third information may be named as "measurement identities", etc., which is not limited in the disclosure.

At step 602, a first measurement result sent by the first terminal is received.

In an embodiment of the disclosure, the network device may receive the first measurement result sent by the first terminal based on the first information.

The first measurement result is obtained by the first terminal performing the sensing measurement based on the configuration of the first information.

In an example, the first measurement result may include at least one of: initial coordinate information of at least one sensing signal cluster received when the first terminal performs the sensing measurement; RCS information of at least one sensing signal cluster received when the first terminal performs the sensing measurement; power information of at least one sensing signal cluster received when the first terminal performs the sensing measurement; delay information of at least one sensing signal cluster received when the first terminal performs the sensing measurement; angle information of at least one sensing signal cluster received when the first terminal performs the sensing measurement; angle spread information of at least one sensing signal cluster received when the first terminal performs the sensing measurement; initial phase information of at least one sensing signal cluster received when the first terminal performs the sensing measurement; motion state information of a sensed object; coordinate information of the first terminal which performs the sensing measurement; or motion state information of the first terminal which performs the sensing measurement.

In an example, the motion state information may include: motion speed information and/or motion direction information.

For example, in an embodiment of the disclosure, the coordinate information included in the measurement result may use a coordinate system defined in a standard as shown in FIG. 3B. FIG. 3B shows a definition of spherical angles and spherical unit vectors in a Cartesian coordinate system, in which n̂ denotes a given direction, and θ and ϕ denote spherical basis vectors.

In some embodiments, the first terminal may send the first measurement result to the network device based on the second information, the third information, and the association between the second information and the third information included in the first information.

For example, the first terminal may send the first measurement result to the network device when a first event configured in the first information is satisfied.

For example, the first terminal may periodically send the first measurement result to the network device based on period information configured in the first information.

In some embodiments, the network device may further receive the second measurement result sent by the first terminal. The second measurement result is obtained by a second terminal performing the sensing measurement. The second measurement result is sent to the first terminal by the second terminal.

Similar to the first measurement result, In an example, the second measurement result may include at least one of: initial coordinate information of at least one sensing signal cluster received when the second terminal performs the sensing measurement; RCS information of at least one sensing signal cluster received when the second terminal performs the sensing measurement; power information of at least one sensing signal cluster received when the second terminal performs the sensing measurement; delay information of at least one sensing signal cluster received when the second terminal performs the sensing measurement; angle information of at least one sensing signal cluster received when the second terminal performs the sensing measurement; angle spread information of at least one sensing signal cluster received when the second terminal performs the sensing measurement; initial phase information of at least one sensing signal cluster received when the second terminal performs the sensing measurement; motion state information of a sensed object; coordinate information of the second terminal which performs the sensing measurement; or motion state information of the second terminal which performs the sensing measurement.

In an example, the motion state information may include: motion speed information and/or motion direction information.

To sum up, the second measurement result sent by the first terminal is received, in which the second measurement result is obtained by the second terminal performing the sensing measurement based on the first information and sent to the first terminal, and the first information is further used to configure the sensing measurement of the second terminal. This enables the terminal to send the sensing measurement result to the network device, or to forward the sensing measurement result to the network device via a sidelink through another terminal, and enables the network device to obtain the sensing measurement result of the terminal and to obtain more information from the terminal side. Further, the terminal may forward the configuration for the sensing measurement to another terminal via the sidelink. Thus, a sensing range may be expanded, more measurement results may be obtained, and communication efficiency of a system may be increased.

Referring to FIG. 7, FIG. 7is a flow chart illustrating a method for measurement according to an embodiment of the disclosure. The method is applied to the communication system shown in FIG. 1. The method may be performed independently or may be performed in combination with any other embodiments of the disclosure. As shown in FIG. 7, the method may include the following steps 701 to 704.

At step 701, a network device sends first information to a first terminal.

In an embodiment of the disclosure, the network device may send the first information to the first terminal.

In an example, the first information is used to configure sensing measurement of the first terminal.

In some embodiments, before sending the first information to the first terminal, the network device may receive a first request sent by the first terminal, in which the first request is used to request the network device to send the first information.

In some embodiments, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

At step 702, the first terminal sends the first information to a second terminal.

In some embodiments, the first terminal may further send the first information to the second terminal, in which the first information is used to configure sensing measurement of the second terminal.

In an example, the first terminal may directly forward the received first information to the second terminal via a sidelink.

In an example, before sending the first information to the second terminal, the first terminal may modify the received first information sent by the network device, and then send the modified first information to the second terminal.

In an example, the first terminal may send the first information to the second terminal when performing sidelink measurement.

It may be understood that, in embodiments of the disclosure, the first information sent by the first terminal to the second terminal and the first information received by the first terminal from the network device may be the same (that is, the first terminal directly forwards the first information received from the network device to the second terminal), or may be different (that is, the first terminal modifies the received first information and sends the modified first information to the second terminal).

At step 703, the second terminal sends a second measurement result to the first terminal.

In some embodiments, the first terminal may further receive the second measurement result sent by the second terminal, and send the second measurement result to the network device.

The second measurement result is obtained by the second terminal performing the sensing measurement based on the configuration of the first information.

At step 704, the first terminal sends the first measurement result and the second measurement result to the network device.

In an embodiment of the disclosure, the first terminal may send, to the network device, the first measurement result obtained by the first terminal performing the sensing measurement, and the received second measurement result sent by the second terminal.

The first measurement result is obtained by the first terminal performing the sensing measurement based on the configuration of the first information.

In embodiments of the disclosure, for optional implementations of step 701 to step 704, reference may be made to optional implementations in FIG. 2 to FIG. 6 and other related parts in the embodiments associated with FIG. 2 to FIG. 6, details are not repeated here.

The method for measurement involved in the embodiments of the disclosure may include at least one of step 701 to step 704. In the implementation or embodiment, where no contradiction exists, the steps may be performed independently, in any combination, or in an exchanged sequence. Optional implementations or examples may be arbitrarily combined, and any combination may be made with any steps from other implementations or other embodiments.

Corresponding to the methods for measurement provided in the above embodiments, the disclosure further provides an apparatus for measurement. Since the apparatus for measurement provided in the embodiments of the disclosure corresponds to the method for measurement provided in the above embodiments, the implementations of the methods for measurement are also applicable to the apparatus for measurement provided in the following embodiments, which is not described in detail here.

Referring to FIG. 8, FIG. 8is a block diagram illustrating an apparatus for measurement according to an embodiment of the disclosure.

As shown in FIG. 8, the apparatus 800 for measurement includes a transceiver unit 810.

The transceiver unit 810 is configured to receive first information sent by a network device, in which the first information is used to configure sensing measurement of the apparatus.

The transceiver unit 810 is further configured to send, based on the first information, the first measurement result to the network device, in which the first measurement result is obtained by performing the sensing measurement.

In an example, the transceiver unit 810 is further configured to send the first information to a second terminal, in which the first information is used to configure sensing measurement of the second terminal; receive a second measurement result sent by the second terminal, in which the second measurement result is obtained by the second terminal performing the sensing measurement; and send the second measurement result to the network device.

In an example, the apparatus further includes a processing unit (not shown in the figure), configured to modify the received first information sent by the network device and obtain the first information sent to the second terminal.

In an example, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

In an example, the measurement result may include at least one of: initial coordinate information of at least one sensing signal cluster received when the terminal performs the sensing measurement; RCS information of at least one sensing signal cluster; power information of at least one sensing signal cluster; delay information of at least one sensing signal cluster; angle information of at least one sensing signal cluster; angle spread information of at least one sensing signal cluster; initial phase information of at least one sensing signal cluster; motion state information of a sensed object; coordinate information of the terminal which performs the sensing measurement; or motion state information of the terminal which performs the sensing measurement.

In an example, the motion state information includes motion speed information and/or motion direction information.

In an example, the first information is used to add a configuration for the sensing measurement of the terminal; and/or, the first information is used to modify a configuration for the sensing measurement of the terminal; and/or, the first information is used to delete a configuration for the sensing measurement of the terminal.

In an example, the first information sent to the second terminal is included in sidelink measurement sent by the first terminal to the second terminal.

In the apparatus for measurement of the embodiments, the first information sent by the network device is received, in which the first information is used to configure the sensing measurement of the first terminal. The first measurement result is sent to the network device based on the first information, in which the first measurement result is obtained by performing the sensing measurement by the first terminal. This enables the terminal to send the sensing measurement result to the network device, or to forward the sensing measurement result to the network device via a sidelink through another terminal, and further enables the network device to obtain the sensing measurement result of the terminal, and obtain more information from the terminal side. Thus, a sensing range is expanded, and communication efficiency of a system is increased.

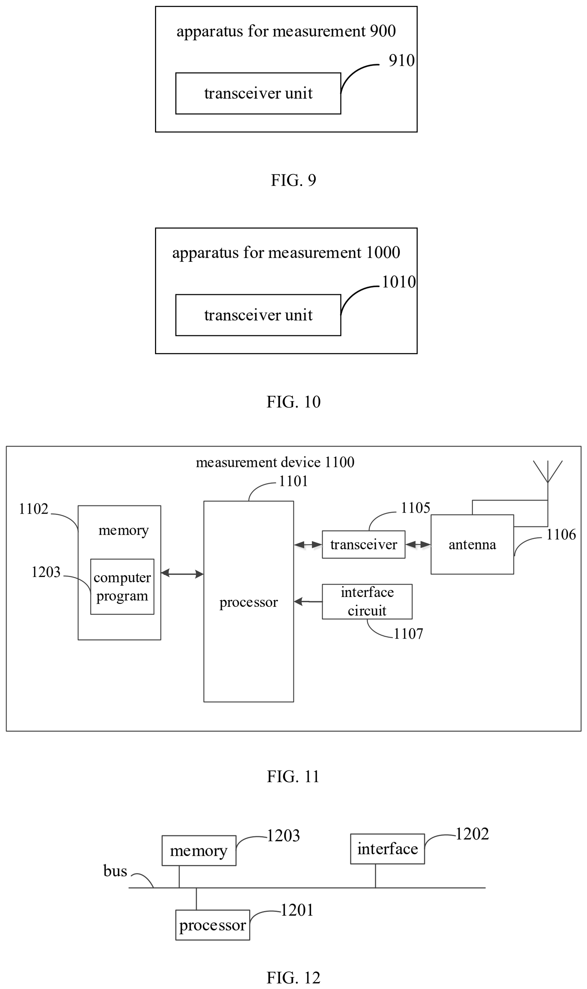

Referring to FIG. 9, FIG. 9is a block diagram illustrating an apparatus for measurement according to an embodiment of the disclosure.

As shown in FIG. 9, the apparatus 900 for measurement includes a transceiver unit 910.

The transceiver unit 910 is configured to receive first information sent by a first terminal, in which the first information is used to configure sensing measurement of the apparatus.

The transceiver unit 910 is further configured to send, based on the first information, the second measurement result to the first terminal, in which the second measurement result is obtained by performing the sensing measurement, and the second measurement result is used for the first terminal to send the second measurement result to a network device.

In an example, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

In an example, the measurement result may include at least one of: initial coordinate information of at least one sensing signal cluster received when the terminal performs the sensing measurement; RCS information of at least one sensing signal cluster; power information of at least one sensing signal cluster; delay information of at least one sensing signal cluster; angle information of at least one sensing signal cluster; angle spread information of at least one sensing signal cluster; initial phase information of at least one sensing signal cluster; motion state information of a sensed object; coordinate information of the terminal which performs the sensing measurement; or motion state information of the terminal which performs the sensing measurement.

In an example, the motion state information includes motion speed information and/or motion direction information.

In an example, the first information is used to add a configuration for the sensing measurement of the terminal; and/or, the first information is used to modify a configuration for the sensing measurement of the terminal; and/or, the first information is used to delete a configuration for the sensing measurement of the terminal.

In an example, the first information is included in sidelink measurement sent by the first terminal to the second terminal.

In the apparatus for measurement of the embodiments, the first information sent by the first terminal is received, in which the first information is used to configure the sensing measurement of the second terminal. The second measurement result is sent to the first terminal based on the first information, in which the second measurement result is obtained by the second terminal performing the sensing measurement, and the second measurement result is used for the first terminal to send the second measurement result to the network device. This enables the terminal to send the sensing measurement result to the network device, or to forward the sensing measurement result to the network device via a sidelink through another terminal, and enables the network device to obtain the sensing measurement result of the terminal and to obtain more information from the terminal side. Further, the terminal may forward the configuration for the sensing measurement to another terminal via the sidelink. Thus, a sensing range is expanded, more measurement results may be obtained, and communication efficiency of a system may be increased.

Referring to FIG. 10, FIG. 10is a block diagram illustrating an apparatus for measurement according to an embodiment of the disclosure.

As shown in FIG. 10, the apparatus 1000 for measurement includes a transceiver unit 1010.

The transceiver unit 1010 is configured to send first information to a first terminal, in which the first information is used to configure sensing measurement of the first terminal.

The transceiver unit 1010 is further configured to receive a first measurement result sent by the first terminal, in which the first measurement result is obtained by the first terminal performing the sensing measurement.

In an example, the transceiver unit 1010 is further configured to receive a second measurement result sent by the first terminal, in which the second measurement result is obtained by a second terminal performing sensing measurement based on the first information and sent to the first terminal, and the first information is further used to configure sensing measurement of the second terminal
In an example, the first information includes at least one of: second information, in which the second information is used by the terminal to determine at least one sensing signal cluster received when performing the sensing measurement; third information, in which the third information is used by the terminal to send the measurement result; or an association between the second information and the third information, in which the association is used to trigger the terminal to send the measurement result.

In an example, the measurement result may include at least one of: initial coordinate information of at least one sensing signal cluster received when the terminal performs the sensing measurement; RCS information of at least one sensing signal cluster; power information of at least one sensing signal cluster; delay information of at least one sensing signal cluster; angle information of at least one sensing signal cluster; angle spread information of at least one sensing signal cluster; initial phase information of at least one sensing signal cluster; motion state information of a sensed object; coordinate information of the terminal which performs the sensing measurement; or motion state information of the terminal which performs the sensing measurement.

In an example, the motion state information includes motion speed information and/or motion direction information.

In an example, the first information is used to add a configuration for the sensing measurement of the terminal; and/or, the first information is used to modify a configuration for the sensing measurement of the terminal; and/or, the first information is used to delete a configuration for the sensing measurement of the terminal.

In an example, the first information sent to the second terminal is included in sidelink measurement sent by the first terminal to the second terminal.

In the apparatus for measurement of the embodiments, the second measurement result sent by the first terminal is received, in which the second measurement result is obtained by the second terminal performing the sensing measurement based on the first information and sent to the first terminal, and the first information is further used to configure the sensing measurement of the second terminal. This enables the terminal to send the sensing measurement result to the network device, or to forward the sensing measurement result to the network device via a sidelink through another terminal, and enables the network device to obtain the sensing measurement result of the terminal and to obtain more information from the terminal side. Further, the terminal may forward the configuration for the sensing measurement to another terminal via the sidelink. Thus, a sensing range may be expanded, more measurement results may be obtained, and communication efficiency of a system may be increased.

To implement the above embodiments, the embodiments of the disclosure further provide a communication apparatus. The communication apparatus includes a processor and a memory storing a computer program. When the computer program is executed by the processor, the communication apparatus is caused to implement any method shown in the embodiments in FIG. 2 to FIG. 4, or method shown in the embodiments in FIG. 5.

To implement the above embodiments, the embodiments of the disclosure further provide a communication apparatus. The communication apparatus includes a processor and a memory storing a computer program. When the computer program is executed by the processor, the communication apparatus is caused to implement method shown in the embodiments in FIG. 6.

To implement the above embodiments, the embodiments of the disclosure further provide a communication apparatus. The communication apparatus includes a processor and an interface circuit. The interface circuit is configured to receive code instructions and transmit the code instructions to the processor; and the processor is configured to execute the code instructions to implement any method shown in the embodiments in FIG. 2 to FIG. 4, or method shown in the embodiments in FIG. 5.

To implement the above embodiments, the embodiments of the disclosure further provide a communication apparatus. The communication apparatus includes a processor and an interface circuit. The interface circuit is configured to receive code instructions and transmit the code instructions to the processor; and the processor is configured to execute the code instructions to implement method shown in the embodiments in FIG. 6.

Referring to FIG. 11, FIG. 11 is a block diagram illustrating a communication device according to an embodiment of the disclosure. The communication device 1100 may be a network device, a terminal, a chip, a system on chip or a processor that supports the network device to implement the above methods, or a chip, a system on chip or a processor that supports the terminal to implement the above methods. The communication device 1100 may be configured to implement the methods described in the method embodiments, which may refer to descriptions in the method embodiments.

The communication device 1100 may include one or more processors 1101. The processor 1101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

In an example, the communication device 1100 may further include one or more memories 1102 with a computer program 1103 stored. The computer program 1103 is executed so that the communication device 1100 performs any method as described in the above method embodiments. The computer program 1103 may be solidified in the processor 1101, in which case the processor 1101 may be implemented by hardware.

In an example, the memory 1102 may further store data. The communication device 1100 and the memory 1102 may be independently configured or integrated together.

In an example, the communication device 1100 may further include a transceiver 1105 and an antenna 1106. The transceiver 1105 may be referred to as a transceiving unit, a transceiver or a transceiving circuit, which may be configured to achieve a transceiving function. The transceiver 1105 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

In an example, the communication device 1100 may further include one or more interface circuits 1107. The interface circuit 1107 is configured to receive code instructions and transmit the code instructions to the processor 1101. The code instructions are executed by the processor 1101 so that the communication apparatus 1000 performs any method as described in the above method embodiments.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the communication device 1100 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal, but the scope of the communication device described in the disclosure is not limited thereto, and a structure of the communication device may not be limited by FIG. 8 to FIG. 10. The communication device may be a stand-alone device or may be a part of a larger device. For example, the communication device may be:
(1) a stand-alone integrated circuit (IC), or a chip, or a system on chip or a subsystem;
(2) a set of one or more ICs, In an example, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

In the case that the apparatus for communication based on precoding may be a chip or a system on chip, reference can be made to a block diagram of a chip shown in FIG. 12. The chip shown in FIG. 12 includes a processor 1201 and an interface 1202. There may be one or more processors 1201 and there may be a plurality of interfaces 1202.

In a case that the chip is configured to implement functions of the terminal in the embodiments of the disclosure, the interface 1202 is configured to receive code instructions and transmit the code instructions to the processor; and the processor 1201 is configured to execute the code instructions to implement any method in FIG. 2 to FIG. 4, or any method in FIG. 5.

In a case that the chip is configured to implement functions of the network device in the embodiments of the disclosure, the interface 1202 is configured to receive code instructions and transmit the code instructions to the processor; and the processor 1201 is configured to execute the code instructions to implement any method in FIG. 6.

In an example, the chip further includes a memory 1203, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a communication system. The system includes the communication apparatus functioning as the network device, and the communication apparatus functioning as the terminal in the above embodiments of FIG. 8 to FIG. 10, or the system includes the communication device functioning as the terminal, and the communication device functioning as the network device in the aforementioned embodiment of FIG. 11.

The disclosure further provides a readable storage medium with instructions stored. When the instructions are executed by a computer, steps in the any of the foregoing method embodiments are implemented.

A computer program product is further provided in the disclosure. The computer program product implements functions of any of the above method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of the embodiments of the disclosure, but also to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of precedence or magnitude between the technical features described in "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps described in embodiments of the disclosure may be performed in parallel, sequentially, or in a different order, as long as the desired result of the technical solution disclosed in the invention is achieved, which is not limited in the disclosure.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for measurement, performed by a first terminal, comprising:
receiving first information sent by a network device, wherein the first information is used to configure sensing measurement of the first terminal;
obtaining a first measurement result by performing the sensing measurement; and
sending, based on the first information, the first measurement result to the network device.

2. The method according to claim 1, further comprising:
sending the first information to a second terminal, wherein the first information is used to configure sensing measurement of the second terminal;
receiving a second measurement result sent by the second terminal, wherein the second measurement result is obtained by the second terminal performing the sensing measurement; and
sending the second measurement result to the network device.

3. The method according to claim 1 or 2, wherein the first information comprises at least one of:
second information, wherein the second information is used by the first terminal and/or a second terminal to determine at least one sensing signal cluster received when performing the sensing measurement;
third information, wherein the third information is used by the first terminal to send the first measurement result, and/or the third information is used by a second terminal to send a second measurement result; or
an association between the second information and the third information, wherein the association is used to trigger the first terminal to send the first measurement result, and/or the association is used to trigger a second terminal to send a second measurement result.

4. The method according to claim 1, further comprising:
obtaining fourth information by modifying the first information;
sending the fourth information to a second terminal, wherein the fourth information is used to configure sensing measurement of the second terminal;
receiving a second measurement result sent by the second terminal, wherein the second measurement result is obtained by the second terminal performing the sensing measurement; and
sending the second measurement result to the network device.

5. The method according to claim 4, wherein the fourth information comprises at least one of:
fifth information, wherein the fifth information is used by the second terminal to determine at least one sensing signal cluster received when performing the sensing measurement;
sixth information, wherein the sixth information is used by the second terminal to send the second measurement result; or
an association between the fifth information and the sixth information, wherein the association is used to trigger the second terminal to send the second measurement result.

6. The method according to any one of claims 1 to 5, wherein the first measurement result comprises at least one of:
initial coordinate information of the at least one sensing signal cluster received when the first terminal performs the sensing measurement;
radar cross section (RCS) information of the at least one sensing signal cluster received when the first terminal performs the sensing measurement;
power information of the at least one sensing signal cluster received when the first terminal performs the sensing measurement;
delay information of the at least one sensing signal cluster received when the first terminal performs the sensing measurement;
angle information of the at least one sensing signal cluster received when the first terminal performs the sensing measurement;
angle spread information of the at least one sensing signal cluster received when the first terminal performs the sensing measurement;
initial phase information of the at least one sensing signal cluster received when the first terminal performs the sensing measurement;
motion state information of a sensed object;
coordinate information of the first terminal which performs the sensing measurement; or
motion state information of the first terminal which performs the sensing measurement.

7. The method according to any one of claims 2 to 5, wherein the second measurement result comprises at least one of:
initial coordinate information of the at least one sensing signal cluster received when the second terminal performs the sensing measurement;
RCS information of the at least one sensing signal cluster received when the second terminal performs the sensing measurement;
power information of the at least one sensing signal cluster received when the second terminal performs the sensing measurement;
delay information of the at least one sensing signal cluster received when the second terminal performs the sensing measurement;
angle information of the at least one sensing signal cluster received when the second terminal performs the sensing measurement;
angle spread information of the at least one sensing signal cluster received when the second terminal performs the sensing measurement;
initial phase information of the at least one sensing signal cluster received when the second terminal performs the sensing measurement;
motion state information of a sensed object;
coordinate information of the second terminal which performs the sensing measurement; or
motion state information of the second terminal which performs the sensing measurement.

8. The method according to claim 6 or 7, wherein the motion state information comprises motion speed information and/or motion direction information.

9. The method according to any one of claims 1 to 8, wherein
the first information is used to add a configuration for the sensing measurement of the first terminal and/or a second terminal; and/or,
the first information is used to modify a configuration for the sensing measurement of the first terminal and/or a second terminal; and/or,
the first information is used to delete a configuration for the sensing measurement of the first terminal and/or a second terminal.

10. The method according to any one of claims 4 to 8, wherein
the fourth information is used to add a configuration for the sensing measurement of the second terminal; and/or,
the fourth information is used to modify a configuration for the sensing measurement of the second terminal; and/or,
the fourth information is used to delete a configuration for the sensing measurement the second terminal.

11. The method according to any one of claims 2 to 10, wherein
the first information sent to the second terminal is comprised in sidelink measurement sent by the first terminal to the second terminal; or,
fourth information sent to the second terminal is comprised in sidelink measurement sent by the first terminal to the second terminal.

12. A method for measurement, performed by a second terminal, comprising:
receiving first information sent by a first terminal, wherein the first information is used to configure sensing measurement of the second terminal;
obtaining a second measurement result by performing the sensing measurement; and
sending, based on the first information, the second measurement result to a first terminal, wherein the second measurement result is used for the first terminal to send the second measurement result to a network device;
wherein the first information is sent by the network device to the first terminal; the first information is further used to configure sensing measurement of the first terminal; the first information is further used for the first terminal to send a first measurement result to the network device; and the first measurement result is obtained by the first terminal performing the sensing measurement.

13. The method according to claim 12, wherein the first information comprises at least one of:
second information, wherein the second information is used by the first terminal and/or the second terminal to determine at least one sensing signal cluster received when performing the sensing measurement;
third information, wherein the third information is used by the first terminal to send the first measurement result, and/or the third information is used by the second terminal to send the second measurement result; or
an association between the second information and the third information, wherein the association is used to trigger the first terminal to send the first measurement result, and/or the association is used to trigger the second terminal to send the second measurement result.

14. The method according to claim 12, further comprising:
receiving fourth information sent by the first terminal, wherein the fourth information is used to configure the sensing measurement of the second terminal, and the fourth information is obtained by the first terminal modifying the first information;
obtaining the second measurement result by performing the sensing measurement; and
sending, based on the fourth information, the second measurement result to the first terminal, wherein the second measurement result is used for the first terminal to send the second measurement result to the network device.

15. The method according to claim 14, wherein the fourth information comprises at least one of:
fifth information, wherein the fifth information is used by the second terminal to determine at least one sensing signal cluster received when performing the sensing measurement;
sixth information, wherein the sixth information is used by the second terminal to send the second measurement result; or
an association between the fifth information and the sixth information, wherein the association is used to trigger the second terminal to send the second measurement result.

16. The method according to any one of claims 12 to 15, wherein the first measurement result comprises at least one of:
initial coordinate information of the at least one sensing signal cluster received when the first terminal performs the sensing measurement;
radar cross section (RCS) information of the at least one sensing signal cluster received when the first terminal performs the sensing measurement;
power information of the at least one sensing signal cluster received when the first terminal performs the sensing measurement;
delay information of the at least one sensing signal cluster received when the first terminal performs the sensing measurement;
angle information of the at least one sensing signal cluster received when the first terminal performs the sensing measurement;
angle spread information of the at least one sensing signal cluster received when the first terminal performs the sensing measurement;
initial phase information of the at least one sensing signal cluster received when the first terminal performs the sensing measurement;
motion state information of a sensed object;
coordinate information of the first terminal which performs the sensing measurement; or
motion state information of the first terminal which performs the sensing measurement.

17. The method according to any one of claims 12 to 15, wherein the second measurement result comprises at least one of:
initial coordinate information of the at least one sensing signal cluster received when the second terminal performs the sensing measurement;
RCS information of the at least one sensing signal cluster received when the second terminal performs the sensing measurement;
power information of the at least one sensing signal cluster received when the second terminal performs the sensing measurement;
delay information of the at least one sensing signal cluster received when the second terminal performs the sensing measurement;
angle information of the at least one sensing signal cluster received when the second terminal performs the sensing measurement;
angle spread information of the at least one sensing signal cluster received when the second terminal performs the sensing measurement;
initial phase information of the at least one sensing signal cluster received when the second terminal performs the sensing measurement;
motion state information of a sensed object;
coordinate information of the second terminal which performs the sensing measurement; or
motion state information of the second terminal which performs the sensing measurement.

18. The method according to claim 16 or 17, wherein the motion state information comprises motion speed information and/or motion direction information.

19. The method according to any one of claims 12 to 18, wherein
the first information is used to add a configuration for the sensing measurement of the first terminal and/or the second terminal; and/or,
the first information is used to modify a configuration for the sensing measurement of the first terminal and/or the second terminal; and/or,
the first information is used to delete a configuration for the sensing measurement of the first terminal and/or the second terminal.

20. The method according to any one of claims 14 to 18, wherein
the fourth information is used to add a configuration for the sensing measurement of the second terminal; and/or,
the fourth information is used to modify a configuration for the sensing measurement of the second terminal; and/or,
the fourth information is used to delete a configuration for the sensing measurement of the second terminal.

21. The method according to any one of claims 12-20, wherein
the first information is comprised in sidelink measurement sent by the first terminal to the second terminal; or,
the fourth information is comprised in sidelink measurement sent by the first terminal to the second terminal.

22. A method for measurement, performed by a network device, comprising:
sending first information to a first terminal, wherein the first information is used to configure sensing measurement of the first terminal; and
receiving a first measurement result sent by the first terminal, wherein the first measurement result is obtained by the first terminal performing the sensing measurement.

23. The method according to claim 22, further comprising:
receiving a second measurement result sent by the first terminal;
wherein the second measurement result is obtained by a second terminal performing sensing measurement based on the first information and sent to the first terminal, and the first information is further used to configure sensing measurement of the second terminal; or,
the second measurement result is obtained by a second terminal performing sensing measurement based on fourth information and sent to the first terminal, and the fourth information is used to configure sensing measurement of the second terminal, and the fourth information is obtained by the first terminal modifying the first information.

24. The method according to claim 22 or 23, wherein the first information comprises at least one of:
second information, wherein the second information is used by the first terminal and/or a second terminal to determine at least one sensing signal cluster received when performing the sensing measurement;
third information, wherein the third information is used by the first terminal to send the first measurement result, and/or the third information is used by a second terminal to send a second measurement result; or
an association between the second information and the third information, wherein the association is used to trigger the first terminal to send the first measurement result, and/or the association is used to trigger a second terminal to send a second measurement result.

25. The method according to claim 23, wherein the fourth information comprises at least one of:
fifth information, wherein the fifth information is used by the second terminal to determine at least one sensing signal cluster received when performing the sensing measurement;
sixth information, wherein the sixth information is used by the second terminal to send the second measurement result; or
an association between the fifth information and the sixth information, wherein the association is used to trigger the second terminal to send the second measurement result.

26. The method according to any one of claims 22 to 25, wherein the first measurement result comprises at least one of:
initial coordinate information of at least one sensing signal cluster received when the first terminal performs the sensing measurement;
radar cross section (RCS) information of at least one sensing signal cluster received when the first terminal performs the sensing measurement;
power information of at least one sensing signal cluster received when the first terminal performs the sensing measurement;
delay information of at least one sensing signal cluster received when the first terminal performs the sensing measurement;
angle information of at least one sensing signal cluster received when the first terminal performs the sensing measurement;
angle spread information of at least one sensing signal cluster received when the first terminal performs the sensing measurement;
initial phase information of at least one sensing signal cluster received when the first terminal performs the sensing measurement;
motion state information of a sensed object;
coordinate information of the first terminal which performs the sensing measurement; or
motion state information of the first terminal which performs the sensing measurement.

27. The method according to any one of claims 23 to 25, wherein the second measurement result comprises at least one of:
initial coordinate information of at least one sensing signal cluster received when the second terminal performs the sensing measurement;
RCS information of at least one sensing signal cluster received when the second terminal performs the sensing measurement;
power information of at least one sensing signal cluster received when the second terminal performs the sensing measurement;
delay information of at least one sensing signal cluster received when the second terminal performs the sensing measurement;
angle information of at least one sensing signal cluster received when the second terminal performs the sensing measurement;
angle spread information of at least one sensing signal cluster received when the second terminal performs the sensing measurement;
initial phase information of at least one sensing signal cluster received when the second terminal performs the sensing measurement;
motion state information of a sensed object;
coordinate information of the second terminal which performs the sensing measurement; or
motion state information of the second terminal which performs the sensing measurement.

28. The method according to claim 26 or 27, wherein the motion state information comprises motion speed information and/or motion direction information.

29. The method according to any one of claims 22 to 28, wherein
the first information is used to add a configuration for the sensing measurement of the first terminal and/or a second terminal; and/or,
the first information is used to modify a configuration for the sensing measurement of the first terminal and/or a second terminal; and/or,
the first information is used to delete a configuration for the sensing measurement of the first terminal and/or a second terminal.

30. The method according to any one of claims 23 to 28, wherein
the fourth information is used to add a configuration for the sensing measurement of the second terminal; and/or,
the fourth information is used to modify a configuration for the sensing measurement of the second terminal; and/or,
the fourth information is used to delete a configuration for the sensing measurement of the second terminal.

31. An apparatus for measurement, comprising:
a transceiver unit, configured to receive first information sent by a network device, wherein the first information is used to configure sensing measurement of the apparatus; and
a processing unit, configured to obtain a first measurement result by performing the sensing measurement;
wherein the transceiver unit is further configured to send, based on the first information, the first measurement result to the network device.

32. An apparatus for measurement, comprising:
a transceiver unit, configured to receive first information sent by a first terminal, wherein the first information is used to configure sensing measurement of the apparatus; and
a processing unit, configured to obtain a second measurement result by performing the sensing measurement;
wherein the transceiver unit is further configured to send, based on the first information, the second measurement result to the first terminal, wherein the second measurement result is used for the first terminal to send the second measurement result to a network device;
wherein the first information is sent by the network device to the first terminal; the first information is further used to configure sensing measurement of the first terminal; the first information is further used for the first terminal to send a first measurement result to the network device; and the first measurement result is obtained by the first terminal performing the sensing measurement.

33. An apparatus for measurement, comprising:
a transceiver unit, configured to send first information to a first terminal, wherein the first information is used to configure sensing measurement of the first terminal;
wherein the transceiver unit is further configured to receive a first measurement result sent by the first terminal, wherein the first measurement result is obtained by the first terminal performing the sensing measurement.

34. A communication device, comprising a processor and a memory storing a computer program that, when executed by the processor, causes the communication device to implement the method according to any one of claims 1 to 11, the method according to any one of claims 12 to 21, or the method according to any one of claims 22 to 30.

35. A communication device, comprising: a processor and an interface circuit; wherein
the interface circuit is configured to receive code instructions and transmit the code instructions to the processor; and
the processor is configured to execute the code instructions to implement the method according to any one of claims 1 to 11, the method according to any one of claims 12 to 21, or the method according to any one of claims 22 to 30.

36. A computer-readable storage medium storing instructions that, when executed, cause the method according to any one of claims 1 to 11, the method according to any one of claims 12 to 21, or the method according to any one of claims 22 to 30 to be implemented.

37. A communication system, comprising:
a first terminal, configured to perform the method according to any one of claims 1 to 11;
a second terminal, configured to perform the method according to any one of claims 12 to 21; and
a network device, configured to perform the method according to any one of claims 22 to 30.
